# EUROPÄISCHE PATENTSCHRIFT

(11) **EP 0 961 797 B1**
(45) Veröffentlichungstag und Bekanntmachung des Hinweises auf die Patenterteilung: **09.04.2003**
(21) Anmeldenummer: 98905370.7
(22) Anmeldetag: 30.01.1998
(51) Int. Cl.: C08G 59/06, C09D 5/44

(54) **WÄSSRIGE BINDEMITTELDISPERSION FÜR KATIONISCHE ELEKTROTAUCHLACKE**
AQUEOUS BINDING AGENT DISPERSION FOR CATIONIC ELECTRO-DIPCOAT PAINT
DISPERSION AQUEUSE DE LIANT POUR PEINTURE POUR TREMPAGE ELECTROPHORETIQUE

(30) Priorität: 03.02.1997 DE 19703869
(43) Veröffentlichungstag der Anmeldung: 08.12.1999
(73) Patentinhaber: BASF Coatings Aktiengesellschaft, 48165 Münster (DE)
(72) Erfinder: OTT, Günther, D-48167 Münster (DE); REUTER, Hardy, D-48167 Münster (DE); JOUCK, Walter, D-48167 Münster (DE); HERNING, Thierry, Singapore 038987 (SG); PIONTEK, Susanne, D-48165 Münster (DE); HEIMANN, Ulrich, D-48165 Münster (DE); GROSSE-BRINKHAUS, Karl-Heinz, D-48301 Nottuln (DE)
(74) Vertreter: Fitzner, Uwe, Dr.
(86) Internationale Anmeldenummer: EP9800493
(87) Internationale Veröffentlichungsnummer: WO98033835

(56) Entgegenhaltungen:
- EP-A- 0 319 703
- WO-A-84/02713
- US-A- 3 975 346
- JOURNAL OF APPLIED POLYMER SCIENCE, Bd. 46, Nr. 6, 25.Oktober 1992, NEW YORK,US, Seiten 991-1000, XP000336013

## Beschreibung

Die vorliegende Erfindung betrifft eine wäßrige Bindemitteldispersion für kationische Elektrotauchlacke auf der Basis von modifizierten Epoxidharzen sowie ein Verfahren zur Herstellung und Verwendung der Dispersion.

Die kationische Elektrotauchlackierung ist ein vor allem zum Grundieren häufig angewandtes Lackierverfahren, bei dem wasserverdünnbare kationische Gruppen tragende Kunstharze mit Hilfe von Gleichstrom auf elektrisch leitende Körper aufgebracht werden.

Die Verwendung modifizierter Epoxidharze als Bindemittel für kationische Elektrotauchlacke ist bekannt ( US-PS 4,104,147; US-PS 4,260,720; US-395 364. US-PS 4,268,542).

Die bisher für einen Einsatz in kationischen Elektrotauchlacken zur Verfügung stehenden modifizierten Epoxidharze sind mit aliphatischen Kohlenwasserstoffen nur schlecht verträglich, in ihrer Elastizität noch verbesserungsbedürftig und führen zu Schichten, die nicht problemlos überlackiert werden können und in ihrer Dicke noch weiter erhöht werden sollten.

Aus der EP 0 256 020 sind wasserverdünnbare Bindemittel für kationische Elektrotauchlacke bekannt. Zur Herstellung der Bindemittel wird eine Diepoxidverbindung, gegebenenfalls zusammen mit mindestens einer Monoepoxidverbindung in einer bei 100 bis 195 ° C durchgeführten Polyaddition. die von einem monofunktionell reagierenden Starter, der entweder eine alkoholische OH-Gruppe, eine phenolische OH-Gruppe oder eine SH-Gruppe trägt, initiiert wird, zu einem Epoxidharz umgesetzt, das dann anschließend noch mit primären und/oder sekundären Aminen oder deren Salzen und/oder dem Salz eines tertiären Amins, einer Sulfid/Säure- oder Phosphin/Säuremischung und gegebenenfalls noch mit einem polyfunktionellen Alkohol, einer Polycarbonsäure. einem Polysulfid oder einem Polyphenoi modifiziert wird.

Zur Herabsetzung der Viskosität müssen hier vor oder während der Zusabe der Amine noch Lösemittel zugesetzt werden. Nachteilig sind demgemäß der hohe Lösernittelgehalt und der niedrige Feststoffgehalt. Insbesondere bedingt die Zugabe von Lösemitteln vor/bei oder bei Zusatz der Amine. daß nach Abschluß der Herstellung der Bindemitteldispersion überschüssiges Lösemittel wieder zu entfernen ist.

Aus der WO 84/02713 bzw. der EP 0 319 703 sind wasserdispergierbare Bindemittel für kationische Elektrotauchlacke auf der Basis von modifzierten Epoxidharzen sowie entsprechende Herstellungsverfahren bekannt.

Nachteilig bei diesem Stand der Technik ist jedoch, daß zur Steuerung der Viskosität auch hier Lösungsmittel eingesetzt werden müssen.

Die Aufgabe der vorliegenden Erfindung besteht demgemäß darin, neue Bindemitteldispersionen auf der Basis von modifizierten Epoxidharzen zu entwickeln, die frei von den oben aufgezeigten Nachteilen sind. Insbesondere sollen die Dispersionen lösemittelarm sein. Insbesondere soll erreicht werden, daß im Anschluß an die Herstellung der Dispersion eine destillative Entfernung von Lösemitteln nicht mehr durchgeführt werden muß.

Diese Aufgabe wird erfindungsgemäß gelöst durch eine wäßrige Bindemitteldispersion für kathodisch abscheidbare Elektrotauchlacke auf der Basis von modifizierten Epoxidharzen, die Ammoniumgruppen enthalten und die erhältlich ist
A) durch Umsetzung
   1. eines Vorproduktes, das unter Zusatz von Phosphinen und/oder Phosphinsalzen als Katalysator herstellbar ist aus
      a) einer Diepoxidverbindung oder einem Gemisch von Diepoxidverbindungen und
      b) Monophenol, Diphenol oder einem Gemisch von Mono- und Diphenolen
   II. mit wenigstens einem organischen Amin oder einer Mischung aus organischen Aminen bei auf 60 bis 130° C reduzierten Zugabetemperaturen zu einem Epoxid-Aminaddukt,
B) durch anschließende oder gleichzeitige Umsetzung der sekundären Hydroxylgruppen, die bei der Umsetzung der Komponenten a) und b) gebildet worden sind, mit Epoxidgruppen des in Stufe A) hergestellten Epoxid-Amin-Adduktes bei einer Temperatur von 110 bis 150° C,
C) durch Zusatz eines Vernetzungsmittels oder eines Gemischs verschiedener Vernetzungsmittel bei einer Temperatur von <15O° C,
D) durch Neutralisierung und
E) durch Dispergierung der in den Stufen A) bis D) erhaltenen Mischung in Wasser.

Die neuen Bindemitteldispersionen können aus leicht zugänglichen Ausgangsstoffen gewonnen werden und zeichnen sich durch gute Verträgtichkeit mit aliphatischen Kohlenwasserstoffen und hohe Elastizität aus.

Es wurde gefunden, daß durch die vorgegebene Reaktionssequenz auf einen Einsatz viskositätssenkender Lösemittel größtenteils verzichtet werden kann, und die sich hieraus ergebenden Bindemitteldispersionen überraschenderweise eine hervorragende Teilchengröße und eine gute Absetzstabilität aufweisen. Darüber hinaus wurde überraschenderweise gefunden, daß mit den erfindungsgemäßen Bindemitteln wässrige Dispersionen mit hohen Feststoffgehalten von 35 bis 45% mit gleichzeitig hinreichend niedriger Viskosität herstellbar sind.

Ein hoher Feststoffgehalt ist aus wirtschaftlichen Gründen erstrebenswert. Bei vorgegebener Kesselgröße kann hieruber eine hohe Festkörperausbeute pro Produktionsansatz erzielt werden oder mit anderen Worten: Die Herstellkosten pro kg Festkörper können bei hohen Feststoffgehalten verringert werden. Einer Festkörpersteigerung sind jedoch Grenzen gesetzt, da die Dispersion für die nach folgenden Verarbeitungsschritte, wie z. B. Filtration, genügend dünn flüssig bleiben muß. Die Obergrenze liegt erfahrungsgemäß bei einer Auslaufviskosität im DIN 4 - Becher von 25 Sekunden.

Für den Fachmann ist es selbstverständlich, daß die Viskosität eines organischen Bindemittels sich verändert, nachdem es mit Säure protoniert und in Wasser dispergiert worden ist. Das heißt, die Viskosität eines Bindemittels in seinem organisch, nicht wässrigen Zustand ist nicht auf die Viskosität in seinem wässrigdispersen Zustand übertragbar. Bei Elektrotauchlack-Bindemitteln können beide Extremfälle beobachtet werden:

Hochviskose Harze können bei vorgegebenen Festkörpern sowohl niedrigviskose wie auch hochviskose wässrige Dispersionen ergeben. Das gesagte gilt ebenfalls für niedrigviskose Harze. Die Steuerungseinflüsse sind von komplexer Natur und auch vom Fachmann in der Regel nicht voll überschaubar. Insofern waren die niedrigen Viskositäten der erfindungsgemäßen Bindemittel mit ihrem vergleichsweise hohen Festkörpergehalt überraschend.

Ihr Einsatz in kationischen Elektrotauchlacken führt zur Abscheidung von dicken Schichten, die gut überlackiert werden können.

Es wurde gefunden, daß der Einsatz der Kompenente b sowohl eine Erhöhung der Elastizität als auch eine Steigerung in der Dicke der abgeschiedenen Schichten zur Folge hat.

In dem Vorprodukt I können als Komponente a alle Verbindungen eingesetzt werden, die zwei reaktive Epoxidgruppen enthalten und ein Epoxidäquivalentgewicht aufweisen, das unter 1000, besonders bevorzugt unter 500 liegt.

Besonders bevorzugte Epoxidverbindungen sind aus Polyphenoien und Epihalohydrinen hergestellte Diglycidylether von Polyphenolen. Als Polyphenole können zum Beispiel eingesetzt werden:

Ganz besonders bevorzugt: Bisphenol A und Bisphenol F. Besonders bevorzugt: 1,1-Bis-(4-hydroxyphenyl)n-heptan. Außerdem sind auch 4,4' Dihydroxybenzophenon, Bis-(4-hydroxyphenyl)-1,1-ethan, Bis-(4-hydroxyphenyl) 1,1-isobutan, Bis-(4-hydroxy-tertiär-butylphenyl)-2,2-propan, Bis-(2-hydroxynaphtyl)methan, 1,5 Dihydroxynaphtalin und phenolische Novolackharze geeignet.

Bevorzugte Epoxidverbindungen sind auch Diglycidylether von mehrwertigen Alkoholen wie Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl)-2,2-propan.

Es können auch Diglycidylester von Polycarbonsäuren, wie zum Beispiel Oxalsäure, Bernsteinsäure, Glutarsäure, Terephthalsäure, 2,6-Naphtalindicarbonsäure, dimerisierter Linolensäure usw., eingesetzt werden. Typische Beispiele sind Glycidyladipat und Glycidylphthalat.

Ferner sind Hydantoinepoxide, epoxidiertes Polybutadien und Diepoxidverbindungen geeignet., die man durch Epoxidierung einer olefinisch ungesättigten alicyclischen Verbindung erhält.

Als Komponente b des Vorprodukts I werden Monophenole, Diphenole, z.B. Bisphenol A, oder Gemische von Mono- und Diphenolen eingesetzt.

Die Reaktion in Stufe I wird vorzugsweise bei 12 0 bis 180° C, vorzugsweise 125 bis 150 °C durchgeführt.

Ggf. wird in dieser Stufe wenig Lösemittel zugegeben. Bevorzugt sind hierfür Xylol oder Propylenglykolmonoalkylether wie Propylenglykolmethylether oder - ethylether.

Durch Zusatz von Phosphin oder Phosphinderivaten bzw. Phosphinsalzen als Katalysatoren wird die Reaktion der Komponenten a und b derart gesteuert, . daß nur phenolische Hydroxylgruppen , nicht jedoch sekundäre Hydroxylgruppen mit Epoxidgruppen reagieren. Die sekundären Hydroxylgruppen entstehen bei der Reaktion der Komponenten a und b. Das verwendete Phosphin kann ein beliebiges Phosphin sein, das keine störenden Gruppen enthält. Beispiele solcher Phosphine sind aliphatische, aromatische oder alicyclische Phosphine, wobei als spezifische Beispiele folgende Phosphine genannt seien:

Niedrige Trialkylphosphine, wie Trimethylphosphin, Triethylphosphin, Tripropylphosphin, Tributylphosphin, gemischte niedrige Alkylphenylphosphine, wie Phenyldimethylphosphin, Phenyldiethylphosphin, Phenyldipropylphosphin, Diphenylmethylphosphin, Diphenylethylphosphin, Diphenylpropylphosphin, Triphenylphosphin, alicyclische Phosphine, wie Tetramethylenethylphosphin und dergleichen. Besonders bevorzugt ist Triphenylphosphin.

Der selektive Umsatz der phenolischen Hydroxylgruppen, der durch den Zusatz der erwähnten Katalysatoren gezielt gesteuert wird, bewirkt, daß das mittlere Molekulargewicht des Vorprodukts unter 1500 g/mol, vorzugsweise unter 1000g/mol liegt. Durch diese Erniedrigung des Molekulargewichts wird eine Viskositätserniedrigung und zugleich eine hinreichende Kühlbarkeit des Vorprodukts erreicht.

Der Festkörpergehalt des Vorprodukts liegt bei ≥ 90 Gew %, vorzugsweise bei 95-100 Gew. %

In Stufe II können nach bzw. unter Reduzierung der Reaktionstemperatur der gemäß Stufe I primäre, sekundäre oder tertiäre Amine bzw. deren Salze oder ein Gemisch aus diesen Verbindungen zugesetzt werden. Vorzugsweise liegen die Temperaturen der 60 bis 130° C, vorzugsweise bei 90 bis 115 °C. Sofern die durch

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin und dergleichen. Geeignet sind ebenfalls Alkanolamine wie z.B. Methylethanolamin, Diethanolamin und dergleichen. Ferner sind Dialkylaminoalkylamine wie z.B. Dimethylaminoethylamin, Diethylaminopropylamin, Dimethylaminopropylamin und dergleichen geeignet.

In den meisten Fällen werden niedermolekulare Amine verwendet, doch ist es auch möglich, höhermolekulare Monoamine anzuwenden.

Polyamine mit primären und sekundären Aminogruppen können in Form ihrer Ketimine mit den Epoxidgruppen umgesetzt werden. Die Ketimine werden aus den Polyaminen in bekannter Weise hergestellt.

Die Amine können auch noch andere Gruppen enthalten, doch sollen diese die Umsetzung des Amins mit der Epoxygruppe nicht stören und auch nicht zu einer Gelierung der Reaktionsmischung führen.

Die für die Wasserverdünnbarkeit und elektrische Abscheidung erforderlichen Ladungen können durch Protonisierung mit wasserlöslichen Säuren (z.B. Borsäure, Ameisensäure, Milchsäure, Propionsäure, Buttersäure, Kohlensäure, bevorzugt Essigsäure) oder auch durch Umsetzung der Oxirangruppen mit Salzen eines Amins oder einer Sulfid/Säure- oder Phosphin/Säure-Mischung erzeugt werden.

Als Salz eines Amins kann vorzugsweise das Salz eines tertiären Amins verwendet werden.

Der Aminanteil des Amin-Säuresalzes ist ein Amin, das unsubstituiert oder substituiert wie im Falle des Hydroxylamins sein kann, wobei diese Substituenten die Umsetzung des Amin-Säuresalzes mit dem Polyepoxid nicht stören sollen und die Reaktionsmischung nicht gelieren soll. Bevorzugte Amine sind tertiäre Amine, wie Dimethylethanolamin, Triethylamin, Trimethylamin, Triisopropylamin und dergleichen. Beispiele von anderen geeigneten Aminen sind in der US-PS 3 839 252 in Spalte 5 Zeile 3 bis Spalte 7, Zeile 42 angegeben.

Die Amin-Säuresalzmischung wird durch Umsetzung des Amins mit der Säure in bekannter Weise erhalten.

Durch den Zusatz der Amine erhöht sich das Molekulargewicht auf über 1000 g/mol, vorzugsweise 1500 bis 2000g/mol. Damit kommt es auch zu einer Erhöhung der Viskosität, die durch die nachfolgende Temperaturerhöhung wiederum kompensiert werden kann.

In Stufe A) können vor oder nach Zusatz des Amins ggf. noch Weichmacher bzw. nicht flüchtige Verdünnungsmittel auf Basis von mono- oder polyfunktionellen Alkoholen zugesetzt werden. Beispielsweise sind Polypropylenglykolverbindungen wie Pluriol P 600 , P900, PE 3100 oder Plastilit 3060 ( alle Warenzeichen der Firma. BASF) verwendbar.

In Stufe A) entstehen Verbindungen, die freie Epoxidgruppen enthalten. Die Epoxiäquivalentgewichte können zwischen 200 und 2000 g/mol der Komponente A) liegen, vorzugsweise 400 und 700 g/mol.

Die nach Stufe A) verbliebenen Epoxidgruppen werden in Stufe B) bei erhöhten Temperaturen mit sekundären Hydroxylgruppen, die bei der Umsetzung der Komponenten a) und b) gebildet worden sind, zur Reaktion gebracht. Vorzugsweise wird die Reaktion bei 110-150° C, besonders bevorzugt bei 130° C durchgeführt. Reicht die Temperaturerhöhung nicht aus, die durch den Anstieg des Molekulargewichts ebenfalls anwachsende Viskosität abzusenken, so können zusätzliche Maßnahmen ergriffen werden.

Die Reaktion in Stufe B) wird vorzugsweise in Gegenwart von Katalysatoren durchgeführt. Besonders bevorzugt wird in Gegenwart von tertiären Aminogruppen gearbeitet. Eine separate zugabe ist jedoch in oder Regel nicht erforderlich, da mit den oben genannten Aminen ein derartiger Katalysator eingetragen wird.

Die erfindungsgemäß hergestellten Bindemittel werden in Stufe C mit Vernetzungsmitteln versetzt.

Als Vernetzungsmittel eignen sich praktisch alle mit Hydroxylgruppen reagierende. mindestens bifunktionelle Verbindungen wie z.B. Polyalkohole, Polyphenole, blockierte Palyisocyanate, Phenoplaste oder Aminoplaste.

Die Vernetzungsmittel werden in der Regel in einer Menge von 5 bis 50, bevorzugt 25 bis 40 Gew.-% bezogen auf das Bindemittel und einer Temperatur von < 150° C, vorzugsweise 90 bis 130°C eingesetzt.

Beispiele für geeignete Aminoplastvernetzungsmittel sind der Hexamethylether von Hexamethylolmelamin, der Triethyltrimethylether von Hexamethylolmelamin, der Hexabutylether von Hexamethylolmelamin und der Hexamethylether von Hexamethylolmelamin und polymere butylierte Melaminformaldehydharze. Ebenso verwendbar sind alkylierte Harnstofformaldehydharze.

Als Vernetzungsmittel werden bevorzugt blockierte Polyisocyanate eingesetzt. Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperatur beständig ist, bei erhöhten Temperaturen, in der Regel im Bereich von etwa 90 bis etwa 300 °C aber reagiert. Bei der Herstellung der blockierten Polyisocyanate können beliebige für die Vernetzung geeignete organische Polyisocyanate verwendet werden. Bevorzugt sind die Isocyanate, die etwa 3 bis etwa 36, insbesondere etwa 8 bis etwa 15 Kohlenstoffatome enthalten. Beispiele geeigneter Diisocyanate sind Trimethylendiisocyanat, Tetramethylendiisocyanat, Pentamethylendiisocyanat, Hexamethylendiisocyanat, Propylendiisocyanat, Ethylethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Tolulendiisocyanat, 4,4' - Diphenylendiisocyanat, 1,5-Naphthylendiisocyanat, 1,4-Naphthylendiisocyanat, 1-Isocyanatomethyl-5-isocyanato-1,3,3-trimethylcyclohexan, bis(4-Isocyanatocyclohexyl)methan, bis(4-Isocyanatophenyl) methan, 4,4'-Diisocyanatodiphenylether und 2,3-bis(8-Isocyanatooctyl)-4-octyl-5-hexylcyclohexen. Es können auch Polyisocyanate von höherer Isocyanatfunktionalität verwendet werden. Beispiele dafür sind tris(4-Isocyanatophenyl)methan, 1,3,5-Triisocyanatobenzol, 2,4,6-Triisocyanatotoluol, 1,3,5-tris (6-Isocyanatohexylbiuret), bis-(2,5-Diisocyanato-4-methylphenyl)methan, und polymere Polyisocyanate, wie Dimere und Trimere von Diisocyanatotoluol. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschließlich eines - Polyetherpolyols oder eines Polyesrerpolyols ableiten.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol; cycloaliphatische Alkohole wie Cyclopentanol und Cyclohexanol; aromatische Alkylalkohole, wie Phenylcarbinol und Methylphenylcarbinol.

Andere geeignete Blockierungsmittel sind Hydroxylamine wie Ethanolamin, Oxime wie Methylethylketonoxim, Acetonoxim und Cyclohexanonoxim oder Amine wie Dibutylamin und Diisopropylamin. Die genannten Polyisocyanate und Blockierungsmittel können bei geeigneten Mengenverhältnissen auch zur Herstellung der oben beschriebenen teilblockierten Polyisocyanate verwendet werden.

Andere Erfindungsgemäß geeignete Polyphenole entsprechen der allgemeinen Formel(I)

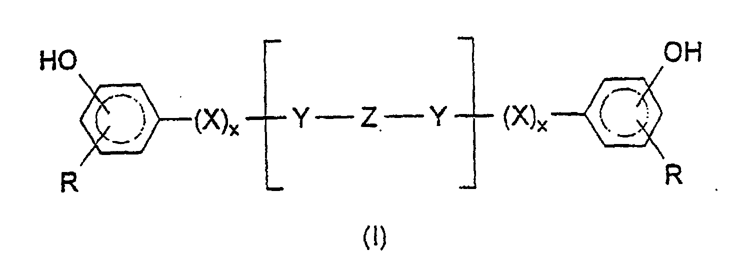

Diese Komponente kann zum Beispiel vorteilhaft auf folgende Weise hergestellt werden. Ein Mol eines höhermolekularen Diols, z.B. eines Polyesterdiols, eines Polycaprolactondiols, eines Polyetherdiols, eines Polycarbonatdiols oder dergleichen, wird mit zwei Molen einer Hydroxyphenylcarbonsäure verestert oder mit zwei Molen eines Hydroxyphenylcarbonsäureesters umgesetzt. Geeignete Hydroxycarbonsäuren sind p-Hydroxybenzoesäure, p-Hydroxyphenylessigsäure und 3-(4-Hydroxyphenyl-) propionsäure oder deren Ester. Wird das Anhängen der Hydroxyphenylgruppe durch Umesterung durchgeführt, kann man auch eine basische Umesterung durchführen und hierzu die Alkaliphenolate der entsprechenden Hydroxyphenylcarbonsäureester einsetzen. Nach Reaktionsende muß das Produkt sauer aufgearbeitet werden, um das gewünschte Polyphenol zu erhalten.

Zur direkten Veresterung kann zum Beispiel auch N-(4Hydroxyphenol-)glycin eingesetzt werden. In einer weiteren Variante können beliebige, saure Polyester mit p-Hydroxyanilin zu den erwünschten Polyphenolen umgesetzt werden.

In einer anderen vorteilhaften Ausgestaltung werden Polyetherdiamine oder ähnliche Polyamine mit z.B. 4-Hydroxy-3-meth-oxybenzaldehyd zu den Polyphenolen umgesetzt.

In Stufe D) kann schließlich eine Neutralisierung durchgeführt werden. Dies geschieht vorzugsweise durch Zusatz von Säuren bei 90 bis 110° C.

Schließlich wird in Stufe E) eine Dispergierung der in den Stufen A) bis D) erhalten Mischung unter Zusatz von Wasser duchgeführt. In einer anderen Ausgestaltung ist es auch mölich, die Neutralisationssäure in Wasser zu geben und die Harzmischung in das angesäuerte Wasser einzudispergierem. Die Teilchengröße der dispergierten Phase liegt bei 30 - 1000, vorzugsweise 50 bis 180 nm.

Die unter Verwendung der erfindungsgemäßen Bindemittel hergestellten wäßrigen Überzugszusammensetzungen können allgemein übliche Zusätze wie z.B. koaleszierende Lösungsmittel, Pigmente, oberflächenaktive Mittel, Vernetzungskatalysatoren, Antioxidantien, Füllstoffe und Antischaummittel zugegeben werden.

Die mit Hilfe der erfindungsgemäßen Bindemittel zubereiteten wäßrigen Systeme sind insbesondere für das kationische Elektrotauchlackierverfahren geeignet; sie können aber auch in konventionellen Beschichtungsverfahren eingesetzt werden. Als Beschichtungssubstrate können z.B. ggfs. vorbehandelte Metalle wie Eisen, Stahl, Kupfer, Zink, Messing, Magnesium, Zinn, Nickel, Chrom und Aluminium aber auch imprägniertes Papier und andere elektrisch leitende Substrate benutzt werden.

Die erfindungsgemäßen Bindemittel eignen sich auch zur Herstellung von Pigmentpasten, d.h., daß die Bindemittel auch als Reibharz eingesetzt werden können.

Bei der Verwendung des Harzes gemäß der Erfindung als Reibharz für die Herstellung einer Pigmentpaste werden die Mengenverhältnisse des epoxyhaltigen organischen Materials und des organischen tertiären Amins, die miteinander umgesetzt werden, bevorzugt so ausgewählt, daß das Trägerharz 0,8 bis 2,0 Stickstoffatome pro Molekül enthält. Geringere Mengen an quarternärem Stickstoff können zu einer schlechten Benetzbarkeit des Pigments führen, wogegen höhere Mengen zur Folge haben, daß die Harze zu wasserlöslich sind.

Man stellt Pigmentpasten nach der Erfindung her, indem man ein Pigment in dem Reibharz in gut bekannter Weise zerkleinert oder dispergiert. Die Pigmentpaste enthält als wesentliche Bestandteile das Reibharz und mindestens ein Pigment.

Außerdem können aber in der Pigmentzusammensetzung noch andere übliche Zusatzstoffe vorhanden sein, wie Weichmacher, Netzmittel, oberflächenaktive Mittel oder Entschäumer.

Die Anreibung der Pigmente erfolgt in der Regel in Kugelmühlen, Sandmühlen. Cowles-Mühlen und kontinuierlichen Mahlvorrichtungen bis das Pigment auf die gewünschte Teilchengröße zerkleinert worden ist und bevorzugt durch das Harz benetzt bzw. darin dispergiert worden ist. Nach dem Zerkleinern sollte die Teilchengröße des Pigments im Bereich von 10 µm oder weniger liegen. Im allgemeinen wird auf eine Hegman-Feinheit von etwa 6 bis 8 zerkleinert. Bevorzugt wird die Anreibung in einer wäßrigen Dispersion des Reibharzes durchgeführt. Die in der anzureibenden Masse anwesende Wassermenge sollte ausreichend sein, um eine kontinuierliche wäßrige Phase zu bilden.

Als Pigment können bei der Erfindung die gut bekannten Pigmente benutzt werden. Im allgemeinen ist Titandioxid das einzige oder das hauptsächliche weiße Pigment. Andere weiße Pigmente oder Streckmittel, wie Antimonooxid, Zinkoxid, basisches Bleicarbonat, basisches Bleisulfat, Bariumcarbonat, Porzellan, Ton, Calciumcarbonat, Aluminiumsilicat, Siliciumdioxid, Magnesiumcarbonat und Magnesiumsilicat können aber auch verwendet werden. Als farbige Pigmente können beispielsweise Cadmiumgelb, Cadmiumrot, Ruß, Phthalocyaninblau, Chromgelb, Toluidinrot und hydratisiertes Eisenoxid benutzt werden. Wegen weiteren allgemeinen Hinweisen auf die Zerkleinerung von Pigmenten und die Formulierung von Anstrichmassen wird auf folgende Bücher verwiesen:
1) D.H.Parker, Principles of Surface Coating Technology, Interscience Publishers. New York (1965)
2) R.L.Yates, Elektropainting, Robert Draper Ltd., Teddington England (1966),
3) H.F.Payne, Organic Coating Technology, Band 2, Wiley and Sons, New York (1961).

Die Erfindung wird in den folgenden Beispielen näher erläutert. Alle Angaben über Teile und Prozentsätze sind Gewichtsangaben, falls nicht ausdrücklich etwas anderes festgestellt wird.

### Beispiele

### 1. Vernetzer

In einem Reaktor, der mit einem Rührer, Rückflußkühler, Innenthermometer und Inertgaseinleitung ausgestattet ist, werden 1084 g Isomere und höherfunktionelle Oligomere auf Basis von 4,4'-Diphenylmethandiisocyanat mit einem NCO-Equivalentgewicht von 135 (Basonat^{R} A270, Fa. BASF; NCO-Funktionalität ca 2,7; Gehalt an 2,2'- und 2,4'-Diphenylmethandiisocyanat unter 5%) unter Stickstoffatmosphäre vorgelegt. Man gibt 2 g Dibutylzinndilaurat zu und tropft 1314 g Butyldiglycol mit einer solchen Geschwindigkeit zu, daß die Produkttemperatur unter 70 °C bleibt. Gegebenenfalls muß gekühlt werden. Nach Ende der Zugabe wird die Temperatur weitere 120 min bei 70 °C gehalten.
Bei der nachfolgenden Kontrolle sind keine NCO-Gruppen mehr nachweisbar. Man kühlt auf 65 °C ab.
Der Feststoffgehalt liegt bei > 97 % (1 h bei 130 °C).

### 2. Herstellung der lösungsmittelarmen wäßrigen Bindemitteldispersion, die ein kathodisch abscheidbares Kunstharz und einen Vernetzer enthalten

### 2.1 Bindemitteldispersion A

In einem wärmeträgerölbeheizten Laborreaktor, ausgestattet mit Rührer, Rückflußkühler, Thermometer und Inertgaseinleitungsrohr, werden 1128 Teile eines handelsüblichen Epoxidharzes auf Basis Bisphenol A mit einem Epoxidäquivalentgewicht (EEW) von 188, 262 Teile Dodecylphenol, 31,4 Teile Xylol und 228 Teile Bisphenol A vorgelegt und unter Stickstoff auf 127 °C aufgeheizt. Unter Rühren werden 1,6 g Triphenylphosphin zugegeben, worauf eine exotherme Reaktion eintritt und die Temperatur auf 160 °C steigt. Man läßt wieder auf 130 °C abkühlen und kontrolliert anschließend den Epoxidgehalt. Das EEW von 532 zeigt an, daß > 98 % der phenolischen OH-Gruppen reagiert haben. Sodann werden 297,5 Teile Pluriol P 900 (Polypropylenglykol MW 900, BASF) unter gleichzeitiger Kühlung zugegeben. 5 Minuten später gibt man bei 120 °C unter weiterer Kühlung 105 Teile Diethanolamin zu. Wenn nach kurzzeitiger Exothermie (Tₘₐₓ 127 °C) die Temperatur auf 110 °C gesunken ist (30 Min.), gibt man 51 Teile N,N-Dimethylaminopropylamin zu. Nach kurzzeitiger Exothermie (Tₘₐₓ 140°C) läßt man den Ansatz für 2 Stunden bei 130°C weiterreagieren, bis die Viskosität konstant bleibt (1,8 dPas, Platte-Kegel-Viskosimeter bei 23 °C, 40 %-ig in Solvenon PM (BASF)). Sodann gibt man unter gleichzeitiger Kühlung 58,5 Teile Butylglykol und 887,8 Teile des Vernetzers (Beispiel 1) zu und trägt bei 105 °C aus.
2100 Teile der noch heißen Mischung werden unverzüglich in einer vorgelegten Mischung aus 1945 Teilen vollentsalztem Wasser (VE - Wasser) und 33,1 Teilen Eisessig unter intensivem Rühren dispergiert. Nach kurzem Homogenisieren wird mit weiteren 1404 Teilen VE-Wasser verdünnt und über Plattenfilter K900 (Fa. Seitz) filtriert. Die Dispersion hat folgende Kennzahlen:
Festkörper (1 Std. bei 130 °C): 35,7 %
MEQ-Base = 0,657 meg/g Festharz
MEQ -Säure = 0,283 meg/g Festharz
pH = 5,4
Mittlere Teilchengröße = 1250 Å (Lichtstreumethode)
Absetzstabilität = nach 3 Monaten Lagerzeit bei Raumtemperatur kein Bodensatz
Viskosität = 14 sec. (DIN4 Becher bei 23 °C)

### 2.2 Bindemitteldispersion B

Analog zu dem in Beispiel 2.1 beschriebenen Verfahren wird aus den nachfolgend aufgelisteten Einsatzstoffen BM-Dispersion 2 hergestellt:

### Harzansatz

| | |
|---|---|
| 1128 | Teile Epoxidharz (Basis Bisphenol A, EEW 188) |
| 108 | Teile p-Kresol |
| 28,4 | Teile Xylol |
| 228 | Teile Bisphenol A |
| 1,5 | Teile Triphenylphosphin EEW=479 |
| 228,8 | Teile Pluriol PE3100 (Propylenoxid-Ethylenoxid-Polyether, Fa. BASF) |
| 105 | Teile Diethanolamin |
| 61,2 | Teile N,N-Dimethylaminopropylamin Zwischenviskosität = 1,8 dPas (Platte-Kegel-Viskosimeter bei 23 °C, 40 %-ig in Solvenom PM) |
| 53,8 | Teile Butylglykol |
| 1001 | Teile Vernetzer (Beispiel 1) |

### Dispersion

| | |
|---|---|
| 2057,6 | Teile Harzansatz (vorstehend beschrieben) |
| 1900,8 | Teile VE-Wasser |
| 41,6 | Teile Eisessig |
| 1405,4 | Teile VE-Wasser |

### Kennzahlen der Dispersion:

Festkörper (1 Std. bei 130°C) = 38,2 %
MEQ-Base =0,731 meg/g Festharz
MEQ-Säure = 0,406 meg/ Festharz
pH = 5,7
Leitwert = 2,3 ms/cm
Mittlere Teilchengröße = 1200 Å (Lichtstreumethode)
Absetzstabilität: Nach 3 Monaten Lagerzeit bei Raumtemperatur kein Bodensatz
Viskosität: 13 sec. (DIN4-Becher bei 23 °C)

### 2.3 Bindemitteldispersion C

Analog zu dem in Beispiel 2.1 beschriebenen Verfahren wird aus den nachfolgenden Einsatzstoffen Bindemitteldispersion BM 3 erhalten:

### Harzansatz

| | |
|---|---|
| 1128 | Teile Epoxidharz (Basis Bisphenol A, EEW 188) |
| 228 | Teile Bisphenol A |
| 94 | Teile Phenol |
| 1,5 | Teile Triphenylphosphin EEW=478 |
| 156,7 | Teile Plastilit 3060 (Polyproplyenglykolverbindung, Fa.BASF) |
| 115,5 | Teile Diethanolamin |
| 61,2 | Teile N,N-Dimethylaminopropylamin Zwischenviskosität: 1,7 dPas (Platte-Kegel-Viskosimeter bei 23 °C, 40 %-ig in Solvenon PM) |
| 97,6 | Teile Butylglykol |
| 812 | Teile Vernetzer (Beispiel 1) |

### Dispersion

| | |
|---|---|
| 2400 | Teile Harzansatz (vorstehend beschrieben) |
| 2173 | Teile VE-Wasser |
| 49,3 | Teile Eisessig |
| 2751,7 | Teile VE-Wasser |

### Kennzahlen der Dispersion:

Festkörper (1 Std. bei 130 °C) = 45,1 %
MEQ-Base = 0,822 meg/g Festharz
MEQ-Säure = 0,375 meg/g Festharz
pH = 5,9
Leitwert = 2,7 ms/cm
Mittlere Teilchengröße = 1450 Å (Lichtstreumethode)
Absetzstabilität: Nach 2 Monaten Lagerzeit bei Raumtemperatur kein Bodensatz
Viskosität: 22 sec. (DIN4-Becher bei 23 °C)
Lösungsmittelgehalt: 1,7 % Butylglykol (gaschromatographisch)

### 3. Kationsche, wasserlösliche Reibharze

### 3.1 Reibharz A

Gemäß EP 505 445 B 1, Beispiel 1.3, stellt man ein Reibharz her, das der bessere Handhabung wegen zusätzlich mit 2,82 Teilen Eisessig und 13,84 Teilen VE-Wasser neutralisiert und verdünnt wird. Der ursprüngliche Festgehalt wird dadurch auf 60 % abgesenkt.

### 3.2 Reibharz B

Gemäß der Offenlegungsschrift DE 26 34 211, Beispiel 2 wird ein Reibharz hergestellt, das blockierte Isocyanatgruppen und quaternäre Ammoniumgruppen enthält. Der Festkörper des Harzes liegt bei 87,6 %. Der besseren Handhabung wegen wird dieses Harz mit einer 1:1-Mischung aus Wasser und Butylglykol auf 60 % verdünnt.

### 4. Wäßrige Pigmentpasten

Gemäß dem in EP 505 445 B1 beschriebenen Verfahren werden aus den in der nachfolgenden Tabelle (Tab. 1) aufgeführten Ausgangsstoffen wäßrige Pigmentpasten hergestellt. Paste B beschreibt die Ausführungsform einer "bleifreien" Pigmentpaste.

**Tabelle 1:**

| Wäßrige Pigmentpasten | | | |
|---|---|---|---|
| Pigmentpaste | A | B | C |
| Reibharz A | 27,30 | 25,00 | - |
| Reibharz B | - | - | 25,17 |
| Kaolin | - | - | 12,71 |
| basisches Bleipigment | 1,40 | - | 2,72 |
| Aluminiumsilikat | 7,60 | 6,00 | - |
| Russ geperlt | 0,50 | 0,60 | 0,28 |
| Titandioxid | 33,35 | 38,10 | 21,73 |
| Dibutyzinnoxid | 1,65 | 2,70 | 0,90 |
| Entionisiertes Wasser | 26,50 | 27,10 | 36,11 |

### 5. Zubereitung der Elektrotauchbäder und Abscheidung von Lackfilmen

Zur Prüfung als kathodisch abscheidbare Elektrotauchlacke werden die unter Punkt 2 beschriebenen wäßrigen Bindemitteldispersionen und die in Tab. 1 aufgeführten Pigmentpasten zu den in Tabelle 2 angegebenen Tauchlackbädern kombiniert. Man verfährt dabei so, daß die Bindemitteldispersion vorgelegt und mit entionisiertem Wasser verdünnt wird. Anschließend wird unter Rühren die Pigmentpaste eingetragen. Die angegebenen Werte entsprechen Gewichtsanteilen.

**Tabelle 2:**

| Elektrotauchbäder | | | |
|---|---|---|---|
| Tauchlack Nr. | 1 | 2 | 3 |
| Bindemitteldispersion A | 2006 | - | - |
| Bindemitteldispersion B | - | 2135 | - |
| Bindemitteldispersion C | - | - | 2160 |
| Pigmentpaste A | 637 | - | - |
| Pigmentpaste B | - | 603 | - |
| Pigmentpaste C | - | - | 405 |
| Entionisiertes Wasser | 2357 | 2263 | 2435 |

Man läßt die Elektrotauchlackbäder 3 Tage bei Raumtemperatur unter Rühren altern. Die Abscheidung der Lackfilme erfolgt während 2 min., bei der angegebenen Spannung auf kathodisch geschalteten zinkphosphatierten Stahlprüftafeln ohne Cr(VI)-Nachspülung in der Vorbehandlung. Die Badtemperatur ist in Tabelle 3 aufgeführt.

Die abgeschiedenen Filme werden mit entionisiertem Wasser nachgespült und während 15 min. bei 175 °C (Objekttemperatur) eingebrannt.

Die Tauchlacke sind mit ihren physikalischen und elektrischen Kenndaten in Tabelle 3 aufgelistet ebenso die Eigenschaften der darauf resultierenden gehärteten Filme.

**Tabelle 3**

| Tauchlack | 1 | 2 | 3 |
|---|---|---|---|
| pH-Wert des | 5,67 | 5,8 | 6,28 |
| KTL-Bades | | | |
| Leitwert des | 1,34 | 1,61 | 2,04 |
| KTL-Bades | | | |
| (mS/cm)¹) | | | |
| Badtemperatur | 29 | 29 | 27 |
| (°C) | | | |
| Abrißspannung | 380 | 350 | 280 |
| (Volt) | | | |
| Abscheidespannung (Volt) | 220 | 220 | 200 |
| | | | |

| Eigenschaften des gehärteten Films: | | | |
|---|---|---|---|
| Filmdicke (µm) | 22 | 21 | 22 |
| Verlauf ²) | 1 | 2 | 1 |
| Vernetzung ³) | >100 | >100 | >100 |
| Schlagtiefung⁴) | 40 | 80 | 100 |
| Erichsen- Tiefung (mm) | 6,5 | 6 | 6,5 |
| Korrosion: | 0,9 | 0,8 | - |
| Unterwanderung (mm) ⁵) | | | |

## Patentansprüche

1. Wäßrige Bindemitteldispersion für kathodisch abscheidbare Elektrotauchlacke auf der Basis von modifizierten Epoxidharzen, die Ammoniumgruppen enthalten, erhältlich
A) durch Umsetzung
I. eines Vorproduktes, das unter Zusatz von Phosphinen und/oder Phosphinsalzen als Katalysator herstellbar ist aus
a) einer Diepoxidverbindung oder einem Gemisch von Diepoxidverbindungen und
b) Monophenol, Diphenol oder einem Gemisch von Mono- und Diphenolen
II. mit wenigstens einem organischen Amin oder einer Mischung aus organischen Aminen bei auf 60 bis 130° C reduzierten Zugabetemperaturen zu einem Epoxid-Aminaddukt,
B) durch anschließende oder gleichzeitige Umsetzung der sekundären Hydroxylgruppen, die bei der Umsetzung der Komponenten a) und b) gebildet worden sind, mit Epoxidgruppen des in Stufe A) hergestellten Epoxid-Amin-Adduktes bei einer Temperatur von 110 bis 150° C,
C) durch Zusatz eines Vernetzungsmittels oder eines Gemischs verschiedener Vernetzungsmittel bei einer Temperatur von <150° C,
D) durch Neutralisierung und
E) durch Dispergierung der in den Stufen A) bis D) erhaltenen Mischung in Wasser.

2. Verfahren zur Herstellung einer wäßrigen Bindemitteldispersion für kathodisch abscheidbare Elektrotauchlacke auf der Basis von modifizierten Epoxidharzen, die Ammoniumgruppen enthalten,
**dadurch gekennzeichnet, daß**
A)
I. ein Vorprodukt, das unter Zusatz von Phosphinen und/oder Phosphinsalzen als Katalysator herstellbar ist aus
a) einer Diepoxidverbindung oder einem Gemisch von Diepoxidverbindungen und
b) Monophenol, Diphenol oder einem Gemisch von Mono- und Diphenolen,
II. mit wenigstens einem organischen Amin oder einer Mischung aus organischen Aminen bei reduzierten Temperaturen von 60 bis 130° C zu einem Epoxid-Aminaddukt umgesetzt wird,
B) anschließend oder gleichzeitig die sekundären Hydroxylgruppen, die bei der Umsetzung der Komponenten a) und b) gebildet worden sind, mit Epoxidgruppen des in Stufe A) hergestellten Epoxid-Amin-Adduktes bei Temperaturen von 110 bis 150° C umgesetzt werden
C) ein Vernetzungsmittel oder ein Gemisch verschiedener Vernetzungsmittel bei einer Temperatur von <150° C zugesetzt wird und
D) neutralisiert und
E) die in den Stufen A) bis D) erhaltene Mischung in Wasser dispergiert wird.

3. Wäßrige Bindemitteldispersion nach Anspruch 1,
**dadurch gekennzeichnet, daß** die Herstellung des Vorprodukts unter Zusatz eines oder mehrerer Lösemittel erfolgt

4. Wäßrige Bindemitteldispersion nach einem der Ansprüche 1 oder 3,
**dadurch gekennzeichnet, daß** der Festkörpergehalt des Vorprodukts > 90 Gew.-% beträgt.

5. Wäßrige Bindemitteldispersion nach einem der Ansprüche 1, 3 oder 4,
**dadurch gekennzeichnet, daß** in Stufe B) Katalysatoren zugesetzt werden.

6. Wäßrige Bindemitteldispersion nach einem der Ansprüche 1 oder 3 bis 5,
**dadurch gekennzeichnet, daß** in Stufe C) 5 bis 50 Gewichtsteile Vernetzer bezogen auf das Gesamtprodukt eingesetzt werden.

7. Wäßrige Bindemitteldispersion nach einem der Ansprüche 1 oder 3 bis 6,
**dadurch gekennzeichnet, daß** in Stufe C) polyfunktionelle Alkohole oder Polycarbonsäuren in einer Menge von 0 bis 30 Gew.-% bezogen auf den Gesamtfestkörper zugegeben werden.

8. Verfahren nach Anspruch 2,
**dadurch gekennzeichnet, daß** die Herstellung des Vorprodukts unter Zusatz eines oder mehrerer Lösemittel erfolgt

9. Verfahren nach einem der Ansprüche 2 oder 8,
**dadurch gekennzeichnet, daß** der Festkörpergehalt des Vorprodukts > 90 Gew.-% beträgt.

10. Verfahren nach einem der Ansprüche 2, 8 oder 9,
**dadurch gekennzeichnet, daß** in Stufe B) Katalysatoren zugesetzt werden.

11. Verfahren nach einem der Ansprüche 2 oder 8 bis 10,
**dadurch gekennzeichnet, daß** in Stufe C) 5 bis 50 Gewichtsteile Vemetzer bezogen auf das Gesamtprodukt eingesetzt werden.

12. Verfahren nach einem der Ansprüche 2 oder 8 bis 11,
**dadurch gekennzeichnet, daß** in Stufe C) polyfunktionelle Alkohole oder Polycarbonsäuren in einer Menge von 0 bis 30 Gew.-% bezogen auf den Gesamtfestkörper zugegeben werden.

13. Verwendung der wäßrigen Bindemitteldispersion nach einem der Ansprüche 1, 3 bis 7 zur Herstellung von kathodisch abscheidbaren Elektrotauchlacken.

## Claims

1. Aqueous binder dispersion for cathodic electrodeposition coatings based on modified epoxy resins containing ammonium groups which is obtainable
A) by reacting
I. a precursor which can be prepared with addition of phosphines and/or phosphine salts as catalyst from
a) a diepoxide compound or a mixture of diepoxide compounds and
b) monophenol, diphenol or a mixture of mono- and diphenols,
II. with at least one organic amine or a mixture of organic amines at a feed temperature reduced to between 60 and 130°C to give an epoxide/amine adduct,
B) subsequently or simultaneously reacting the secondary hydroxyl groups formed during the reaction of components a) and b) with epoxide groups of the epoxide/amine adduct prepared in step A) at a temperature of from 110 to 150°C,
C) adding a crosslinking agent or a mixture of various crosslinking agents, at a temperature of < 150°C, preferably from 90 to 130°C,
D) neutralizing the mixture, and
E) dispersing the mixture obtained in steps A) to D) in water.

2. Process for the preparation of an aqueous binder dispersion for cathodic electrodeposition coatings based on modified epoxy resins containing ammonium groups **characterized in that** it comprises reacting
A)
I. a precursor which can be prepared with addition of phosphines and/or phosphine salts as catalyst from
a) a diepoxide compound or a mixture of diepoxide compounds and
b) monophenol, diphenol or a mixture of mono- and diphenols,
II. with at least one organic amine or mixture of organic amines at a temperature reduced to between 60 and 130°C to give an epoxide/amine adduct,
B) subsequently or simultaneously reacting the secondary hydroxyl groups formed during the reaction of components a) and b) with epoxide groups of the epoxide/amine adduct prepared in step A) at temperatures of from 110 to 150°C,
C) adding a crosslinking agent or a mixture of various crosslinking agents, at a temperature of < 150°C, and
D) neutralizing the mixture, and
E) dispersing the mixture obtained in steps A) to D) in water.

3. Aqueous binder dispersion as claimed in claim 1, **characterized in that** the precursor is prepared with addition of one or more solvents.

4. Aqueous binder dispersion as claimed in either of claims 1 or 3, **characterized in that** the solids content of the precursor is > 90% by weight.

5. Aqueous binder dispersion as claimed in one of claims 1, 3 or 4, **characterized in that** catalysts are added in step B).

6. Aqueous binder dispersion as claimed in one of claims 1 or 3 to 5, **characterized in that** from 5 to 50 parts by weight of crosslinking agent, based on the entire product, are employed in step C).

7. Aqueous binder dispersion as claimed in one of claims 1 or 3 to 6, **characterized in that** polyfunctional alcohols or polycarboxylic acids are added in step C) in an amount of from 0 to 30% by weight, based on the solids content.

8. Process as claimed in claim 2, **characterized in that** the precursor is prepared with addition of one or more solvents.

9. Process as claimed in either of claims 2 and 8, **characterized in that** the solids content of the precursor is > 90% by weight.

10. Process as claimed in any of claims 2, 8 and 9, **characterized in that** catalysts are added in step B).

11. Process as claimed in any of claims 2 and 8 to 10, **characterized in that** from 5 to 50 parts by weight of crosslinking agent, based on the entire product, are employed in step C).

12. Process as claimed in any of claims 2 and 8 to 11, **characterized in that** polyfunctional alcohols or polycarboxylic acids are added in step C) in an amount of from 0 to 30% by weight, based on the solids content.

13. Use of the aqueous binder dispersion as claimed in any of claims 1 and 3 to 7 for the preparation of cathodic electrodeposition coatings.

## Revendications

1. Dispersion aqueuse de liant pour peintures pour électrodéposition aptes au dépôt cathodique, à base de résines époxy modifiées qui contiennent des groupes ammonium, pouvant être obtenue
A) par réaction
I. d'un précurseur qui peut être préparé avec addition de phosphines et/ou de sels de phosphines en tant que catalyseur, à partir de
a) un diépoxyde ou un mélange de diépoxydes et
b) un monophénol, un diphénol ou un mélange de mono- et diphénols,
II. avec au moins une aminé organique ou un mélange d'aminés organiques, à des températures d'addition réduites à 60-130°C, pour aboutir à un adduit époxyde-amine,
B) par réaction subséquente ou simultanée des groupes hydroxy secondaires qui ont été formés lors de la réaction des composants a) et b), avec des groupes époxy de l'adduit époxyde-amine préparé dans l'étape A), à une température de 110 à 150°C,
C) par addition d'un agent de réticulation ou d'un mélange de divers agents de réticulation, à une température de < 150°C,
D) par neutralisation et
E) par dispersion dans l'eau du mélange obtenu dans les étapes A) à D).

2. Procédé pour la préparation d'une dispersion aqueuse de liant pour peintures pour électrodéposition aptes au dépôt cathodique, à base de résines époxy modifiées qui contiennent des groupes ammonium, **caractérisé en ce que**
A) on fait réagir
I. un précurseur qui peut être préparé avec addition de phosphines et/ou de sels de phosphines en tant que catalyseur, à partir de
a) un diépoxyde ou un mélange de diépoxydes et
b) de monophénol, diphénol ou mélange de mono- et diphénols,
II. avec au moins une aminé organique ou un mélange d'amines organiques, à des températures réduites à 60-130°C, pour obtenir un adduit époxyde-amine,
B) on fait réagir ensuite ou simultanément les groupes hydroxy secondaires qui ont été formés lors de la réaction des composants a) et b), avec des groupes époxy de l'adduit époxyde-amine préparé dans l'étape A), à des températures de 110 à 150°C,
C) on ajoute un agent de réticuiation ou un mélange de divers agents de réticulation, à une température de < 150°C, et
D) on neutralise et
E) on disperse dans l'eau le mélange obtenu dans les étapes A) à D).

3. Dispersion aqueuse de liant selon la revendication 1, **caractérisée en ce que** la préparation du précurseur s'effectue avec addition d'un ou plusieurs solvants.

4. Dispersion aqueuse de liant selon la revendication 1 ou 3, **caractérisée en ce que** la teneur en matières solides du précurseur est > 90 % en poids.

5. Dispersion aqueuse de liant selon l'une quelconque des revendications 1, 3 ou 4, **caractérisée en ce qu'**on ajoute des catalyseurs dans l'étape B).

6. Dispersion aqueuse de liant selon l'une quelconque des revendications 1 ou 3 à 5, **caractérisée en ce qu'**on utilise dans l'étape C) 5 à 50 parties en poids d'agent de réticulation, par rapport au produit total.

7. Dispersion aqueuse de liant selon l'une quelconque des revendications 1 ou 3 à 6, **caractérisée en ce que** dans l'étape C) on ajoute des alcools polyfonctionnels ou des acides polycarboxyliques en une quantité de 0 à 30 % en poids, par rapport à la matière solide totale.

8. Procédé selon la revendication 2, **caractérisé en ce que** la préparation du précurseur s'effectue avec addition d'un ou plusieurs solvants.

9. Procédé selon la revendication 2 ou 8, **caractérisé en ce que** la teneur en matière solide du précurseur est > 90 % en poids.

10. Procédé selon l'une quelconque des revendications 2, 8 ou 9, **caractérisé en ce que** dans l'étape B) on ajoute des catalyseurs.

11. Procédé selon l'une quelconque des revendications 2 ou 8 à 10, **caractérisé en ce que** dans l'étape C) on utilise 5 à 50 parties en poids d'agent de réticulation, par rapport au produit total.

12. Procédé selon l'une quelconque des revendications 2 ou 8 à 11, **caractérisé en ce que** dans l'étape C) on ajoute des alcools polyfonctionnels ou des acides polycarboxyliques en une quantité de 0 à 30 % en poids, par rapport à la matière solide totale.

13. Utilisation de la dispersion aqueuse de liant selon l'une quelconque des revendications 1, 3 à 7, pour la préparation de peintures pour électrodéposition aptes au dépôt cathodique.
